# EUROPÄISCHE PATENTSCHRIFT

(11) **EP 0 704 658 B1**
(45) Veröffentlichungstag und Bekanntmachung des Hinweises auf die Patenterteilung: **10.01.2001**
(21) Anmeldenummer: 95112657.2
(22) Anmeldetag: 11.08.1995
(51) Int. Cl.: F23G 5/20, F23G 5/027, C10B 53/00, C10B 1/10

(54) **Verfahren zur thermischen Behandlung von Abfallmaterial, insbesondere Müll**
Process for thermal treatment of waste material, especially refuse
Procédé de traîtement thermique des matières résiduaire, notamment des ordures

(30) Priorität: 29.09.1994 CH 294694
(43) Veröffentlichungstag der Anmeldung: 03.04.1996
(73) Patentinhaber: Von Roll Umwelttechnik AG, 8005 Zürich (CH)
(72) Erfinder: Rüegg, Hans, CH-5610 Wohlen (CH)
(74) Vertreter: Patentanwälte Schaad, Balass, Menzl & Partner AG

(56) Entgegenhaltungen:
- WO-A-91/07127
- US-A- 4 037 543
- US-A- 4 734 166
- US-A- 4 859 177
- US-A- 4 976 210

## Beschreibung

Die Erfindung betrifft ein Verfahren zur thermischen Behandlung von Abfallmaterial, insbesondere Müll, nach dem Oberbegriff des Patentanspruchs 1.

Bei der Verbrennung von Abfallmaterial, insbesondere Hausmüll, wird in überwiegendem Masse der Rostofen eingesetzt. Der Müll wird dabei auf einem Verbrennungsrost mit Hilfe von beweglichen Rostblöcken durch den Feuerungsraum gefördert, getrocknet und verbrannt. Als Oxidationsmittel wird Luft verwendet, die den Verbrennungsrost und die sich darauf befindenden Abfälle von unten nach oben durchströmt. Der Anteil des Abfalls, der die Zündtemperatur erreicht hat, wird entzündet, und die dabei freigesetzten Rauchgase werden in eine Nachbrennkammer gefördert, wo Sekundärluft zugegeben wird, damit die Rauchgase vollständig ausgebrannt werden. Durch diese Verbrennungsmethode werden im Idealfall sämtliche organischen Anteile des Mülls in Kohlendioxid und Wasser umgewandelt. Die nach der Verbrennung entstehende Schlacke wird abgekühlt und zu einer Schlackendeponie oder zur Weiterverarbeitung transportiert. Die Rauchgase werden nach der Nachverbrennung meistens durch einen Wärmeaustauscher geleitet, in welchem die entstandene Wärme teilweise zurückgewonnen wird, bevor sie zur Reinigung in nachgeschaltete Aggregate weitergeleitet werden.

Aus der US-A-4,734,166 ist ein Drehrohrofen zur Verbrennung von Abfallmaterial mit Luft bekannt. Dabei werden an derselben Stirnseite des Drehrohrofens sowohl das Abfallmaterial eingeführt als auch die heissen Abgase entnommen.

In der US-A-4,976,210 wird ein Drehrohrofen für Sondermüll beschrieben. An einer Stirnseite des Drehrohrofens ist ein Brenner angeordnet. Aus einer oberhalb und in Richtung der Längsachse des Drehrohrofens angeordneten, mit Öffnungen versehenen Leitung wird Luft zugeführt.

Die oben beschriebene, herkömmliche Art der Müllverbrennung weist gewisse Nachteile auf. Bei der vollständigen Verbrenmit Luft als Oxidationsmittel entsteht pro Tonne Müll eine Rauchgasmenge von etwa 5000 bis 6000 m³. Diese Rauchgasmenge muss einer aufwendigen Reinigung unterzogen werden, damit sie in die Atmosphäre emittiert werden dürfen. Die Aggregate zur Rauchgasreinigung und Wärmegewinnung müssen dementsprechend ausgelegt werden. Sie unterliegen staatlichen Kontrollen. Die Investionen für solche Anlagen sind deshalb entsprechend hoch.

Ein weiterer Nachteil dieses Verfahrens besteht darin, dass Stäube und nur teilweise ausgebrannte Russ- und Aschenpartikel aufgewirbelt und von den Rauchgasen in die nachgeschalteten Aggregate mitgenommen werden, wenn Luft durch den Verbrennungsrost und durch die Abfallschicht hindurchströmt. Dort werden sie abgelagert, was vor allem bei der Wärmerückgewinnung zu Problemen führt. Die Ablagerungen im nachgeschalteten Wärmetauscher verschlechtern den Wärmeübergang, und verursachen Korrosionen an den Wärmetauscherflächen, was den termischen Wirkungsgrad der Anlage senkt und zu aufwendigen Revisionsarbeiten führt.

Die Verbrennungstemperaturen sind wegen der Werkstoffe, aus welchen die Rostblöcke bestehen, nicht beliebig wählbar. Auch die erreichbare Verweilzeit des Abfalls im Feuerungsraum ist begrenzt und von der Baugrösse des Verbrennungsrostes abhängig. Dies wirkt sich negativ auf die Qualität der Schlacke aus. Deswegen ist ein vollständiger Ausbrand des Abfalls nicht gewährleistet. Ausserdem bleiben immer eluierbare, anorganische Schadstoffe in der Schlacke zurück, welche später die Weiterverwendung oder Ablagerung in der Deponie verunmöglichen oder zumindest stark erschweren.

Um diese Probleme bei dem oben erwähnten bekannten Müllverbrennungsverfahren zu lösen, wurden verschiedene alternative Verfahren entwickelt, die jedoch nach wie vor schwerwiegende Nachteile aufweisen.

Um die Verbrennungstemperatur zu erhöhen und die Rauchgasmenge zu verringern und damit auch die Grösse und die Investionskosten der nachgeschalteten Aggregate zu verringern, wurde die durch den Verbrennungsrost durchströmende Verbrennungsluft mit Sauerstoff angereichert. Dieses Verfahren führt jedoch zu nicht beherrschbaren Temperaturen auf dem Verbrennungsrost. Eine relevante Reduktion der Rauchgasmenge kann somit nicht erreicht werden, und die thermische und mechanische Rostbelastung steigt.

Neben der Müllverbrennung ist als weiteres thermisches Verfahren zur Energiegewinnung aus Abfall die Entgasung, auch als Pyrolyse, Schwelung oder Verkokung genannt, bekannt (vgl. dazu Fachzeitschrift Müll und Abfall 12/1978).

Bei allen auf Entgasung basierenden Verfahren wird der Abfall unter Sauerstoffausschluss erhitzt. Dabei werden die organischen Verbindungen im Abfall instabil; die flüchtigen Bestandteile entweichen, und die nicht flüchtigen Anteile werden in Koks umgewandelt.

Weil die Entgasung unter Sauerstoffausschluss erfolgt, wird bei den bisher bekannten Verfahren die für das endotherme Prozess notwendige Energie dem Abfall über Heizflächen zugeführt, die im direkten Kontakt mit dem Abfall stehen müssen. Solche Heizflächen werden entweder durch von aussen beheizte Ofenwände, oder durch im Ofen liegende Heizrohre gebildet. Wegen der schlechten Wärmeleitung des Abfalls ist eine Vorbehandlung und Zerkleinerung des Abfalls vor dem eigentlichen Entgasungsprozess unumgänglich. Durch den Kontakt zwischen dem abrasiven Müll und den Heizflächen müssen die mechanischen Teile mit hohem Aufwand gewartet werden.

Andere bekannte thermische Verfahren basieren auf einer Einschmelzung des Abfalls, kombiniert mit Entgasung bzw. Vergasung. Bei diesen Verfahren werden praktisch ausschliesslich Schachtöfen als Hauptaggregat verwendet, wie sie aus der Roheisenherstellung bekannt sind. Aus der Eisenherstellung ist es aber bekannt, dass ein Schachtofen nur dann problemlos betrieben werden kann, wenn eine homogene Struktur des einzuschmelzenden Gutes gewährleistet ist. Ein heterogener Brennstoff wie Hausmüll weist auch nach einer Vorbehandlung keine solche homogene Struktur auf. Dies führt zu Brückenbildungen im Schachtofen und zur Bildung grösserer Agglomerate. Die für die Gas-Feststoffreaktion notwendige Feststoffoberfläche nimmt somit ab, und die Oxidierung der organischen Bestandteile ist nicht gewährleistet. Das hat zur Folge, dass die nicht ausgebrannten organischen Bestandteile in der Schmelze eingeschlossen werden und somit nicht mehr oxidiert werden können. Bei der nachfolgenden Abkühlung und Granulierung der Schmelze treten Bruchstellen auf, in denen die nicht-oxidierten Bestandteile zum Vorschein kommen. Die Produktion einer inerten Schlacke ist nicht gewährleistet.

Der vorliegenden Erfindung liegt die Aufgabe zugrunde, ein Verfahren der eingangs genannten Art zu schaffen, bei welchem die vorstehend genannten Nachteile eliminiert werden und die Rauchgasmenge erheblich reduziert wird.

Diese Aufgabe wird verfahrensmässig durch die Merkmale des kennzeichnenden Teils von Patentanspruch 1.

Die Erfindung hat gegenüber den bekannten Verfahren den erheblichen Vorteil, dass das Abfallmaterial, insbesondere Müll, ohne jegliche Vorbehandlung wie Zerkleinerung oder dergleichen der thermischen Behandlung unterworfen werden kann, wobei die entstehende Rauchgasmenge vorteilhaft mindestens zur Hälfte reduziert wird. Die unverbrannten flüchtigen Bestandteile entweichen aufgrund der hohen Temperaturen und der homogenen Erwärmung der Abfallschicht gänzlich. Sie werden gesamthaft abgezogen und können einer Nachverbrennung zugeführt oder in anderen Prozessen als Brennstoff eingesetzt werden. Weil das Oxidationsmittel oberhalb der Abfallschicht eingeführt wird, werden die Nachteile, wie Aufwirbelung von Staub und dergleichen vermieden. Das abfallmaterial wird dabei entlang, d.h. in Längsrichtung, mit dem Oxidationsmittel beaüfschlagt.

Da im Drehrohrofen nur Entgasung anstatt vollständige Verbrennung stattfindet und die Temperatur während dieses Entgasungsprozesses durch die Menge des gasförmigen Oxidationsmittels reguliert wird, kann die thermische Beanspruchung der Anlage niedrig gehalten werden.

Als gasförmiges Oxidationsmittel wird vorzugsweise Sauerstoff verwendet. An Stelle von Sauerstoff können mit letzterem angereicherte Rauchgase, die mindestens 50% Sauerstoff enthalten, dem Drehrohrofen als Oxidationsmittel wieder zugeführt werden. Die bei der Verbrennung der brennbaren flüchtigen Stoffe entstehende Wärme wird mittels Wärmestrahlung, in diesem Fall Gasstrahlung, direkt auf die im Ofen befindlichen Abfallstoffe geleitet und anderseits auf die Wand des Drehrohrofens übertragen, von wo sie die Abfallstoffe durch direkten Kontakt aufheizen.

Das erfindungsgemässe Verfahren mit der direkten Erwärmung des Abfallmaterials durch Wärmestrahlung weist gegenüber herkömmlichen Pyrolyseverfahren, bei denen die Wärme dem Abfallmaterial durch eine Wand zugeführt wird, grosse Vorteile auf. Mit dem erfindungsgemässen Verfahren kann bis zu Wandtemperaturen von um 1200°C geheizt werden, während man bei den bekannten Pyrolyseverfahren mit indirekter Heizung aus materialtechnischen Gründen mit einer Wandtemperatur von unter 650°C auskommen muss. Die beim erfindungsgemässen Verfahren angewendeten hohen Temperaturen verbessern den Wärmeübergang von den Flammen auf die Drehrohrwand und damit werden die Abfallstoffe durch den direkten Kontakt stärker erwärmt. Dadurch erfolgt eine schnellere Aufheizung was das Arbeiten mit kleineren Drehrohröfen erlaubt. Zusätzlich entfallen die Dichtungsprobleme zwischen Heizgasraum und Aussenluft sowie zwischen Heizgasraum und Innenraum einer Pyrolysetrommel wie bei den herkömmlichen Drehrohröfen, da der Heizgasraum entfällt.

Durch Zuführung von zusätzlichem gasförmigen Oxidationsmittel in einer nachgeschalteten Stufe können weitere Anteile des im Abfallmaterial noch vorhandenen brennbaren Materials - ob flüchtig oder fest - verbrannt werden. Dadurch wird die Temperatur in dieser Stufe weiter erhöht und die restlichen, hauptsächlich oxidischen Bestandteile werden in die Schmelzphase überführt. Bei dieser Verfahrensweise erfolgt im Drehrohrofen nacheinander die Trocknung, die Entgasung, die Verbrennung und das Schmelzen der festen Verbrennungsrückstände, d.h. die Ueberführung des Abfallmaterials in ein inertes weiterverwertbares Produkt.

Weitere Vorteile folgen aus der nachfolgenden Beschreibung, in welcher die Erfindung anhand in den Zeichnungen dargestellten Beispiele näher erläutert wird. Es zeigt:
- Fig. 1: eine erste Ausführungsform eines Drehrohrofens, und
- Fig. 2: eine zweite Ausführungsform eines Drehrohrofens zur Durchführung des Verfahrens.

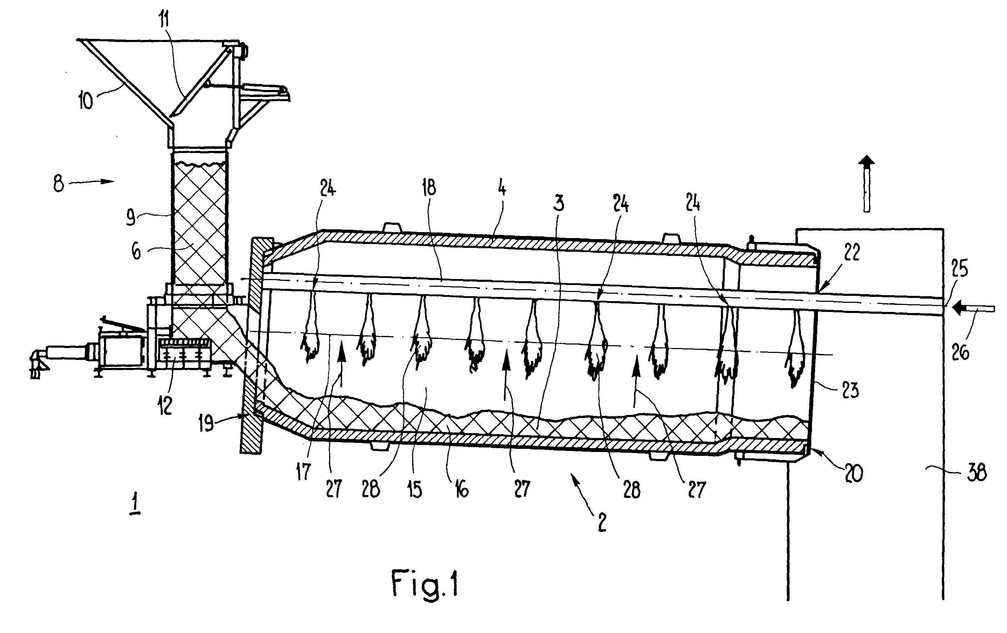

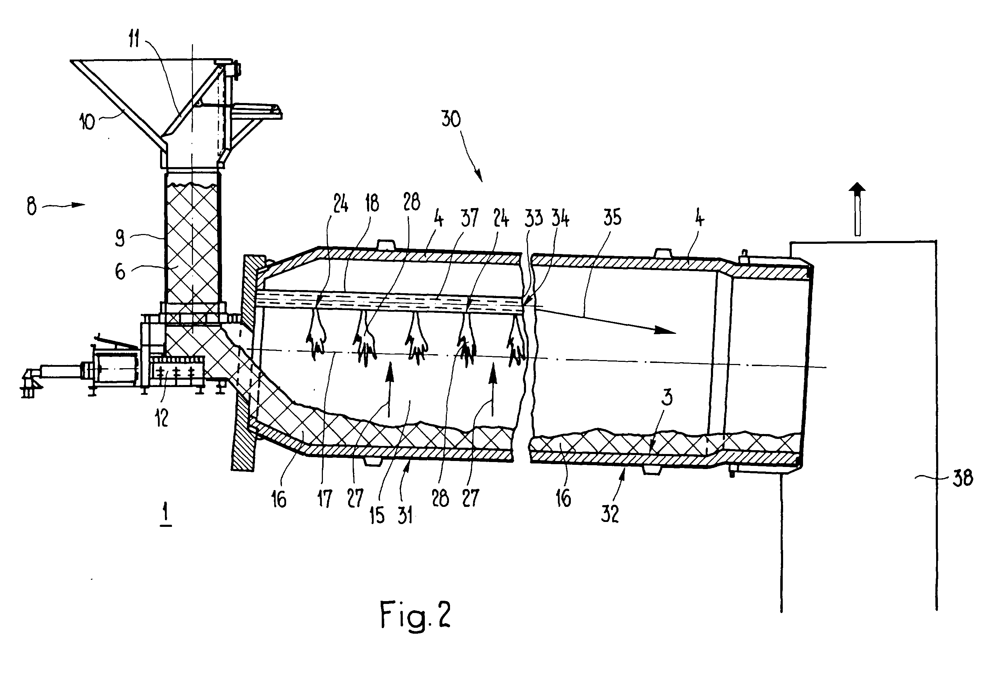

In den Figuren sind für dieselben Elemente jeweils dieselben Bezugszeichen verwendet. Sofern dieselben Elemente mit den gleichen Funktionen in Figur 2 vorkommen, werden sie nur mit Bezug auf Figur 1 erklärt.

In Figur 1 ist ein Drehrohrofen 1 mit einer leicht schräg geneigten Drehtrommel 2 dargestellt. Die Neigung gegenüber der Horizontale beträgt 3° bis 7°, vorzugsweise etwa 5°. Die Drehtrommel 2 weist eine feuerfest ausgemauerte und isolierte Innenwand 3 und eine Aussenmantel 4 aus Stahl auf. Zu behandelndes Abfallmaterial 6, welches Hausmüll, Industrieabfälle oder dergleichen sein kann, wird in ihrer ursprünglichen Form, d.h. ohne Zerkleinerung, in eine Einfülleinrichtung 8 eingefüllt, die eingangsseitig zur Drehtrommel 2 in vertikaler Richtung am nicht näher angegebenen Ofengestell befestigt ist. Die Einfülleinrichtung 8 besteht in diesem Fall aus einem rohrförmigen Schacht 9 von gleichbleibendem Durchmesser und einem Einfülltrichter 10, in welchem eine mechanisch bewegbare Klappe 11 drehbar angeordnet ist. Es sind auch andere Einfülleinrichtungen möglich. Die Klappe 11 dichtet den Ofen gegenüber der Atmosphäre ab. Am unteren Ende des Schachts 9 ist ein horizontal beweglicher Dosierstössel 12 vorgesehen, mit welchem das Abfallmaterial 6 schubweise in einen Feuerungsraum 15 der Drehtrommel 2 befördert werden. Das in den Feuerungsraum 15 eingefüllte Abfallmaterial 16 wird durch die kontinuierliche Drehbewegung der Drehtrommel 2 vorwärts gefördert und gleichzeitig umgeschichtet und vermischt. Wie ersichtlich ist die Drehtrommel 2 nur im unteren Bereich mit Abfallmaterial 16 gefüllt.

Oberhalb der Längsachse 17 der Drehtrommel 2 ragt ein als Lanze bezeichnetes Rohr 18 an der rechten Stirnseite 20 in die Drehtrommel 2 hinein. Diese rohrförmige Lanze 18 ist mit Vorteil gekühlt (hier nicht dargestellt) und erstreckt sich über die ganze Länge der Drehtrommel 2 und ist ortsfest mit einem nicht näher angegebenen Ofengestell auf der in Figur 1 gesehen linken Stirnseite 19 der Drehtrommel 2 verbunden. Das rechte Ende der Drehtrommel 2 ragt in eine Kammer 38, durch welche die Rauchgase in die nachgeschalteten Aggregate geleitet werden. Die Lanze 18 ist an der rechten Rückwand dieser Kammer 38 befestigt. Die behandelten Rückstände fallen aus der Drehtrommel in die darunter angeordnete nächste Behandlungsstufe, z.B. einen Schmelzofen. Die rohrförmige Lanze 18 weist über ihre gesamte Länge in regelmässigen Abständen nach unten zeigende Radialbohrungen oder Düsenöffnungen 24 auf, durch welche von einem freien, offenen Ende 25 auf der in der Figur gesehen rechten Seite der rohrförmigen Lanze 18, mit dem Pfeil 26 angedeutetes Oxidationsmittel in Richtung des Abfallmaterials 16 herausströmt.

Aus dem ständig durchmischten Abfallmaterial 16 entweichen flüchtige Bestandteile oder Gase, die mit den Pfeilen 27 angedeutet sind, die mit den Oxidationsmitteln 26 an den Radialbohrungen oder Düsenöffnungen 24 Flammen 28 bilden.

In Figur 2 ist eine Variante dieses Drehrohrofens 1 gezeigt, bei welcher die Drehtrommel 30 wesentlich länger als die Drehtrommel 2 in Figur 1 ausgebildet ist. Diese Länge beträgt vorzugsweise das zweifache der Länge der Drehtrommel 2. Die Drehtrommel 30 ist in einen ersten Teil 31, in welchem die eigentliche Entgasung stattfindet, und einen zweiten Teil 32, in welchem eine Nachverbrennung stattfindet, geteilt. Die rohrförmige Lanze 18 erstreckt sich hier nur bis zum ersten Teil 31 der Drehtrommel 30 und weist ein in den zweiten Teil 32 mündendes offenes Ende 33 auf, in welchem eine stirnseitige Öffnung 34 vorgesehen ist. Das Oxidationsmittel 26 wird in diesem Fall von links in der Figur 2 gesehen in die Lanze 18 eingeleitet, was nicht weiter dargestellt ist. Das aus dem offenen Ende 33 ausströmende, mit dem Pfeil 35 angedeutete Oxidationsmittel beaufschlagt das Abfallmaterial 16 in den zweiten Teil 32 der Drehtrommel 2. Es kann dasselbe wie das eingeleitete und aus den Radialbohrungen oder Düsenöffnungen 24 ausströmende Oxidationsmittel 26 oder auch ein anderes sein. In letztem Fall weist die rohrförmige Lanze 18 ein zusätzliches gestrichelt angedeutetes Rohr 37 bis zum offenen Ende 33 auf, durch welches das andere Oxidationsmittel dann in den zweiten Teil 32 eingeleitet wird.

Anstatt einheitliche Radialbohrungen oder Düsenöffnungen 24 in der rohrförmigen Lanze 18 können auch individuell steuerbare Düsen in der rohrförmigen Lanze 18 vorgesehen sein. Mit diesen Düsen kann die Zufuhr von Oxidationsmittel 26 über die Länge der Drehtrommel 2 (Fig. 1) oder des ersten Teils 31 der Drehtrommel 30 (Fig. 2) zur Steuerung der Temperaturverteilung im eingefüllten Abfallmaterial 16 eingestellt werden.

Das Verfahren zur thermischen Behandlung des Abfallmaterials erfolgt nun gemäss nachstehendem Vorgang (dies gilt sowohl für den Drehrohrofen 2 in Figur 1 als auch für den Drehrohrofen 30 in Figur 2):

Das Abfallmaterial 6 wird unzerkleinert in die Einfülleinrichtung 8 eingefüllt und bis zu einem vorgegebenen Füllniveau aufgefüllt. Mit dem Dosierstössel 12 wird dann das Abfallmaterial 6 quasikontinuierlich in den Feuerungsraum 15 des Drehrohrofens 1 eingeschoben. Dabei wird mit jedem Vorwärtsschub jeweils die gleiche Menge Abfallmaterial 16 befördert. Die Vorschubgeschwindigkeit des Dosierstössels 12 kann stufenlos geregelt werden, um eine Anpassung an die in den Schacht 9 eingefüllte Menge Abfallmaterial 6 zu ermöglichen. Das so dauernd eingefüllte Abfallmaterial 16 in der Drehtrommel 2 oder in der Drehtrommel 30 wird durch die kontinuierliche Drehbewegung vorwärts gefördert und gleichzeitig umgeschichtet und vermischt.

Die aus dem Abfallmaterial 16 ständig entweichenden flüchtigen Bestandteile oder Gase 27 bilden dann mit dem Oxidationsmittel 26 an den Radialbohrungen oder Düsenöffnungen 24 Flammen 28, wodurch die für die Trocknung und Entgasung des Abfallmaterials 16 notwendige Wärme freigesetzt wird. Die freigesetzte Wärme wird mittels Gasstrahlung einerseits auf das eingefüllte Abfallmaterial 16 und andererseits auf die Innenwand 3 gerichtet, von welcher sie indirekt durch Abstrahlung und direkten Kontakt ebenfalls auf das Abfallmaterial 16 übertragen wird. Dadurch erhöht sich einerseits die Temperatur des Abfallmaterials 16 und andererseits die Wandtemperatur der Innenwand 3. Somit können höhere Temperaturen im geschichteten Abfallmaterial 16 erreicht werden, ohne die Lebensdauer des Drehrohrofens 1 zu verkürzen. Durch die sehr hohe Abbrandgeschwindigkeit der Flammen 28 wird eine Diffusion des Oxidationsmittel 26 in das Abfallmaterial 16 verhindert und so eine reine und vollständige Entgasung sichergestellt. Vorzugsweise wird die Menge des gasförmigen Oxidationsmittels derart gesteuert, dass die entstehenden Flammen 28, das im unteren Bereich der Drehtrommel 2 bewegte Abfallmaterial 16 nicht berühren.

Als gasförmiges Oxidationsmittel 26 wird ein Gas mit einem hohen Sauerstoffanteil eingesetzt, in der Regel mit einem Anteil von über 50% O₂, z.B. mit Sauerstoff angereicherte Luft oder Rauchgas. Es kann jedoch auch Sauerstoff allein eingesetzt werden. Die Temperatur im Feuerungsraum 15 wird durch die Zuführung des gasförmigen Oxidationsmittels 26 gesteuert. Weil das Oxidationsmittel 26 ziemlich weit oberhalb des eingefüllten Abfallmaterials 16 und gesteuert durch die Radialbohrungen oder Düsenöffnungen 24 eingeleitet wird, werden kein Staub und andere feinteiligen Schadstoffen aufgewirbelt. Da die Umwälzung immer wieder neue Oberflächen des Abfallmaterials 16 freigibt, kann die thermische Strahlung der Flammen 28 und der Innenwand 3 der Drehtrommel 2 (Fig. 1) oder der Drehtrommel 30 (Fig. 2) schneller eine grössere Menge Abfallmaterial 16 aufheizen, so dass ein stabiler Endzustand wesentlich schneller erreicht wird und vorallem eine Zerkleinerung und Vorbehandlung des Abfallmaterials 6 entfällt. Ferner kann die Verweilzeit und Schichtdicke des Abfallmaterials 16 in den Drehtrommeln 2 oder 30 durch variable Drehgeschwindigkeit der Drehtrommel 2 oder der Drehtrommel 30 verändert werden. Mit einzeln steuerbaren Düsen in der Lanze 18 kann ausserdem die Temperaturverteilung in der Drehtrommel 2 oder 30 gesteuert werden.

Die brennbaren flüchtigen Bestandteile oder Gase 27, die nicht verbrannt werden, werden abgezogen, um beispielsweise einer Nachverbrennung zugeführt zu werden. Das von den flüchtigen Bestandteilen 27 befreite Abfallmaterial 16 fällt als Müllkoks an. Die brennbaren und noch nicht verbrannten flüchtigen Bestandteile 27 und der Müllkoks können als - gegenüber dem Abfallmaterial 16 - homogenisierte Brennstoffe in einer externen Anlage zur Energiegewinnung (hier nicht dargestellt) weiter verwendet werden. Die unverbrannten, brennbaren flüchtigen Bestandteile 27 müssen jedoch vorher von Staub und sonstigen Schadstoffen in einer (nicht gezeigten) Anlage gereinigt werden und der Müllkoks muss zuvor von inerten Stoffen befreit werden, bevor sie der externen Nachverbrennung zugeführt werden können.

Da bei der beschriebenen Entgasung kein oder kaum Staub und andere feinteiligen Schadstoffen aufgewirbelt werden, ist eine geringere Nachreinigung der Rauchgase erforderlich.

Die Nachverbrennung kann im zweiten Teil 32 des Drehtrommels 30 im Drehrohrofen 1 der Figur 2 durchgeführt werden, oder auch in einer nachgeschalteten Anlage, zum Beispiel in einem weiteren Drehrohrofen oder in einer Wirbelschichtofen (hier nicht weiter dargestellt). Der Müllkoks kann andererseits auf einem nachgeschalteten Verbrennungsrost (hier nicht dargestellt) in der üblichen Art nachverbrannt werden. Da vorzugsweise ein Oxidationsmittel 26 mit einem hohen Sauerstoffanteil verwendet wird, wird die anfallende Rauchgasmenge um bis zu 80% reduziert, und es entstehen Rauchgase mit einem Anteil von bis zu 50% Wasserdampf.

Es ist schon aus der Kohlenindustrie bekannt, dass solche Rauchgase mit Vorteil als Vergasungsmittel verwendet werden, um Kohlenstoff abzubauen. Daher können die bei der Oxidation oder Verbrennung im vorliegenden thermischen Behandlungsverfahren entstehenden Rauchgase ebensogut dem nachzuverbrennenden Müllkoks zugeführt werden. Die Rauchgase können aber auch mit Sauerstoff angereichert werden und als Oxidationsmittel 26 über die rohrförmige Lanze 18 wieder in den Feuerungsraum 15 eingeführt werden.

Durch die zusätzliche Beaufschlagung mit Oxidationsmittel 35 in den zweiten Teil 32 der Drehtrommel 30 (Fig. 2) wird die Verbrennung weitergeführt und die Temperatur in der Drehtrommel 30 gegenüber den ersten Teil 31 zusätzlich erhöht, wodurch die entstehende Schlacke entweder gesintert oder in einen glasartigen Zustand geschmolzen wird. Das dabei gewonnene gesinterte oder flüssige Glas kann anschliessend in bekannter Weise abgezogen werden.

Mit dem oben beschriebenen Verfahren ist es möglich, in jedem Bereich des Drehrohrofens 1 diejenige Temperatur einzustellen, die für den jeweiligen Prozessablauf optimal und gewünscht ist. Ferner lassen sich durch entsprechende Beaufschlagung mit Oxidationsmittel 26 und 35 diejenigen Bedingungen im Drehrohrofen 1 einstellen, die eine Reduzierung der Rauchgase um bis zu 80% im Vergleich zu den herkömmlichen Abfallbehandlungen bewirken. Gleichzeitig wird eine nahezu vollständige Inertisierung der Schlacke erhalten, so dass sie entweder weiter verwendet oder umweltverträglich abgelagert werden können.

## Patentansprüche

1. Verfahren zur thermischen Behandlung von Abfallmaterial (16), insbesondere von Müll, bei welchem das Abfallmaterial (16) unter gleichzeitiger Durchmischung durch einen Feuerungsraum (15) gefördert und ein gasförmiges Oxidationsmittel (26) dem Feuerungsraum (15) zugeführt wird, wobei der Feuerungsraum (15) als Drehtrommel (2; 30) eines Drehrohrofens (1) ausgebildet ist, in welcher das Abfallmaterial (16) entlang des Drehrohrofens mit dem gasförmigen Oxidationsmittel (26) beaufschlagt wird, das oberhalb des Abfallmaterials (16) mit dessen flüchtigen brennbaren Bestandteilen (27) Flammen (28) bildet, deren Wärme die Freisetzung von weiteren flüchtigen Bestandteilen (27) des Abfallmaterials (16) bewirkt und das von den flüchtigen Bestandteilen (27) befreite Abfallmaterial (16) als Müllkoks und die nichtverbrannten flüchtigen Bestandteile als brennbares Gas gewonnen werden, dadurch gekennzeichnet, dass das gasförmige Oxidationsmittel (26) mit Sauerstoff angereichert wird, wobei die Menge des gasförmigen Oxidationsmittels derart dosiert wird, dass die Flammen (28) das im unteren Bereich des Feuerungsraumes (15) bewegte Abfallmaterial (16) nicht berühren, und dass der Müllkoks sowie die nichtverbrannten flüchtigen Bestandteile zu derselben Stirnseite (20) der Drehtrommel (2;30) hin gefördert werden.

2. Verfahren nach Anspruch 1, dadurch gekennzeichnet, dass als gasförmiges Oxidationsmittel (26) mindestens 50% Sauerstoff enthält oder vorzugsweise Sauerstoff ist.

3. Verfahren nach Anspruch 1 oder 2, dadurch gekennzeichnet, dass das Oxidationsmittel (26) mit Sauerstoff angereichertes Rauchgas oder mit Sauerstoff angereicherte Luft ist.

4. Verfahren nach einem der vorangehenden Ansprüche, dadurch gekennzeichnet, dass das gasförmige Oxidationsmittel (26) dem Feuerungsraum (15) in Richtung des Abfallmaterials (16) strömend zugeführt wird.

5. Verfahren nach einem der vorangehenden Ansprüche, dadurch gekennzeichnet, dass das Abfallmaterial (16) über die ganze Länge der Drehtrommel (2) des Drehrohrofens (1) mit dem Oxidationsmittel (26) beaufschlagt wird.

6. Verfahren nach einem der vorangehenden Ansprüche, dadurch gekennzeichnet, dass Oxidationsmittel (26) über die Länge der Drehtrommel (2) des Drehrohrofens (1) dosiert zugeführt und dadurch die Temperatur örtlich gesteuert wird.

7. Verfahren nach einem der vorangehenden Ansprüche, dadurch gekennzeichnet, dass die Wandtemperatur der Innenwand (3) der Drehtrommel (2; 30) des Drehrohrofens (1) bis zu 1'200°C beträgt.

8. Verfahren nach einem der vorangehenden Ansprüche, dadurch gekennzeichnet, dass das brennbare Gas und/oder der Müllkoks anlageextern zur Energiegewinnung verwendet werden.

9. Verfahren nach einem der vorangehenden Ansprüche, dadurch gekennzeichnet, dass das brennbare Gas und/oder der Müllkoks intern in einer nachgeschalteten Stufe zur Energiegewinnung verwendet werden.

10. Verfahren nach einem der vorangehenden Ansprüche, dadurch gekennzeichnet, dass die Freisetzung der flüchtigen Bestandteile (27) des Abfallmaterials (16) in einem ersten Teil (31) der Drehtrommel (30) des Drehrohrofens (1) erfolgt und in einem zweiten Teil (32) der Drehtrommel (30) des Drehrohrofens (1) der im ersten Teil entstandene Müllkoks mit gasförmigem Oxidationsmittel (35) beaufschlagt wird, derart, dass der Müllkoks vollständig und die flüchtigen brennbaren Bestandteile (27) des Abfallmaterials (16) mindestens teilweise oxidiert werden, wobei die entstehende Schlacke gesintert oder geschmolzen wird.

## Claims

1. Method for the thermal treatment of waste material (16), in particular of refuse, in which the waste material (16) is conveyed through a furnace chamber (15), whilst at the same time being intermixed, and a gaseous oxidizing agent (26) is supplied to the furnace chamber (15), the furnace chamber (15) being designed as a rotary drum (2; 30) of a rotary tubular kiln (1), in which drum the waste material (16) is subjected, along the rotary tubular kiln, to the gaseous oxidizing agent (26) which forms above the waste material (16), by means of the volatile combustible constituents (27) of the latter, flames (28), the heat of which brings about the release of further volatile constituents (27) of the waste material (16), and the waste material (16) freed of the volatile constituents (27) being recovered as refuse coke and the unburnt volatile constituents being recovered as combustible gas, characterized in that the gaseous oxidizing agent (26) is enriched with oxygen, the quantity of the gaseous oxidizing agent being metered in such a way that the flames (28) do not touch the waste material (16) moved in the lower region of the furnace chamber (15), and in that the refuse coke and the unburnt volatile constituents are conveyed towards the same end face (20) of the rotary drum (2; 30).

2. Method according to Claim 1, characterized in that the gaseous oxidizing agent (26) contains at least 50% oxygen or is preferably oxygen.

3. Method according to Claim 1 or 2, characterized in that the oxidizing agent (26) is smoke gas enriched with oxygen or is air enriched with oxygen.

4. Method according to one of the preceding claims, characterized in that the gaseous oxidizing agent (26) is supplied to the furnace chamber (15) so as to flow in the direction of the waste material (16).

5. Method according to one of the preceding claims, characterized in that the waste material (16) is subjected to the oxidizing agent (26) over the entire length of the rotary drum (2) of the rotary tubular kiln (1).

6. Method according to one of the preceding claims, characterized in that oxidizing agent (26) is supplied, metered, over the length of the rotary drum (2) of the rotary tubular kiln (1) and the temperature is thereby controlled locally.

7. Method according to one of the preceding claims, characterized in that the wall temperature of the inner wall (3) of the rotary drum (2; 30) of the rotary tubular kiln (1) is up to 1200°C.

8. Method according to one of the preceding claims, characterized in that the combustible gas and/or the refuse coke are used, externally to the plant, for energy generation.

9. Method according to one of the preceding claims, characterized in that the combustible gas and/or the refuse coke are used, internally in a downstream stage, for energy generation.

10. Method according to one of the preceding claims, characterized in that the release of the volatile constituents (27) of the waste material (16) takes place in a first part (31) of the rotary drum (30) of the rotary tubular kiln (1) and the refuse coke obtained in the first part is subjected to gaseous oxidizing agent (35) in a second part (32) of the rotary drum (30) of the rotary tubular kiln (1), in such a way that the refuse coke is oxidized completely and the volatile combustible constituents (27) of the waste material (16) are oxidized at least partially, the slag obtained being sintered or melted.

## Revendications

1. Procédé pour le traitement thermique de matière de rebut (16), en particulier de déchets, dans lequel la matière de rebut (16) est transportée à travers une chambre de combustion (15) avec mélange simultané et un agent d'oxydation (26) gazeux est introduit dans la chambre de combustion (15), la chambre de combustion (15) étant en forme de tambour rotatif (2; 30) d'un four tubulaire rotatif (1), tambour dans lequel la matière de rebut (16) vient en contact, le long du four tubulaire rotatif, avec l'agent d'oxydation gazeux (26), qui, au-dessus de la matière de rebut (16) avec ses composants volatiles combustibles (27), forme des flammes (28) dont la chaleur provoque le dégagement de composants (27) volatiles supplémentaires de la matière de rebut (16) et la matière de rebut (16), débarrassée des composants volatiles (27), est récupérée en tant que coke de déchets et les composants volatiles non brûlés sont récupérés en tant que gaz combustibles, caractérisé en ce que, l'agent d'oxydation gazeux (26) est enrichi en oxygène, la quantité de l'agent d'oxydation gazeux étant dosée de sorte que les flammes (28) ne touchent pas la matière de rebut (16) mise en mouvement dans la zone inférieure de la chambre de combustion (15), et en ce que le coke de déchets ainsi que les composants volatiles non brûlés sont transportés vers la même face frontale (20) du tambour rotatif (2 ; 30).

2. Procédé selon la revendication 1, caractérisé en ce que l'agent d'oxydation sous forme gazeuse (26) contient au moins 50% d'oxygène ou de préférence est de l'oxygène.

3. Procédé selon la revendication 1 ou 2, caractérisé en ce que l'agent d'oxydation (26) est du gaz de combustion enrichi en oxygène ou de l'air enrichi en oxygène.

4. Procédé selon l'une des revendications précédentes, caractérisé en ce que l'agent d'oxydation gazeux (26) est introduit dans la chambre de combustion (15) et s'écoule dans la direction de la matière de rebut (16).

5. Procédé selon l'une quelconque des revendications précédentes, caractérisé en ce que la matière de rebut (16) vient en contact avec l'agent d'oxydation (26) sur toute la longueur du tambour rotatif (2) du four tubulaire rotatif (1).

6. Procédé selon l'une quelconque des revendications précédentes, caractérisé en ce que l'agent d'oxydation (26) est introduit par doses sur toute la longueur du tambour rotatif (2) du four tubulaire rotatif (1) et la température est ainsi régulée localement.

7. Procédé selon l'une quelconque des revendications précédentes, caractérisé en ce que la température de paroi de la paroi intérieure (3) du tambour rotatif (2; 30) du four tubulaire rotatif (1) s'élève jusqu'à 1200°C.

8. Procédé selon l'une quelconque des revendications précédentes, caractérisé en ce que, le gaz combustible et/ou le coke de déchets sont employés à l'extérieur de l'installation comme source d'énergie.

9. Procédé selon l'une quelconque des revendications précédentes, caractérisé en ce que, le gaz combustible et/ou le coke de déchets sont employés de façon interne dans une étape ultérieure comme source d'énergie.

10. Procédé selon l'une quelconque des revendications précédentes, caractérisé en ce que, le dégagement des composants volatiles (27) de la matière de rebut (16) a lieu dans une première partie (31) du tambour rotatif (30) du four tubulaire rotatif (1) et dans une deuxième partie (32) du tambour rotatif (30) du four tubulaire rotatif (1), le coke de déchets formé dans la première partie vient en contact avec l'agent d'oxydation gazeux (35), de sorte que le coke de déchets et les composants combustibles volatiles (27) de la matière de rebut (16) sont au moins partiellement oxydés, la scorie formée étant frittée ou fondue.
